Europäisches Patentamt

(19) European Patent Office

Office européen des brevets

(11) Veröffentlichungsnummer: **0 068 251
B1**

(12) **EUROPÄISCHE PATENTSCHRIFT**

(45) Veröffentlichungstag der Patentschrift:
16.01.85

(21) Anmeldenummer: **82105153.9**

(22) Anmeldetag: **12.06.82**

(51) Int. Cl.⁴: **F 16 K 11/04**

(54) Umschaltventil für Verbundzähler.

(30) Priorität: **22.06.81 DE 3124371**

(43) Veröffentlichungstag der Anmeldung:
**05.01.83 Patentblatt 83/1**

(45) Bekanntmachung des Hinweises auf die Patenterteilung:
**16.01.85 Patentblatt 85/3**

(84) Benannte Vertragsstaaten:
**AT BE CH FR GB IT LI NL SE**

(56) Entgegenhaltungen:
**DE - B - 1 960 735
DE - C - 323 612
DE - C - 1 041 704**

(73) Patentinhaber: **Hydrometer Gesellschaft mbH,
Weiserstrasse 13, D-8800 Ansbach (DE)**

(72) Erfinder: **Schmidt, Karl, Höhenweg 33, D-8800 Ansbach
(DE)**

(74) Vertreter: **Splanemann, Ralner et al, Patentanwälte R.
Splanemann Dr. B. Reltzner Tal 13,
D-8000 München 2 (DE)**

**Beschreibung**

Die Erfindung betrifft ein Umschaltventil für Verbundzähler der im Oberbegriff von Anspruch 1 angegebenen und aus der DE-B Nr. 1960735 bekannten Art.

Bei dem bekannten Umschaltventil ist das Schliessorgan unmittelbar durch den Druck des Hauptstroms und zwei diesem entgegenwirkende Federorgane unterschiedlicher Stärke bewegbar. Dabei wird das starke Federorgan nur im unmittelbaren Schliessbereich wirksam. Hat das Schliessorgan diesen verlassen, wird die starke Federkraft durch die konstruktive Gestaltung des Umschaltventils auf mechanische Weise eliminiert, und es wirkt dem Strömungsdruck nur noch das schwache Federorgan mit relativ flacher Kennlinie entgegen. Ausserdem ist dem Schliessorgan ein hydraulisches Stellglied in Form eines hydraulischen Drückers zugeordnet, dessen Arbeitsraum ständig nur von dem Druck des Hauptstroms beaufschlagt ist, so dass der hydraulische Drücker und damit beim Schliessen auch das Schliessorgan ständig dem Differenzdruck der Messflüssigkeit vor und hinter dem Schliessorgan und den diesem entgegenwirkenden Federorganen ausgesetzt sind. Der hydraulische Drücker ist nämlich beim Öffnen des Schliessorgans von diesem abgehoben, bewegt sich nach dem Öffnen durch Abnahme der Druckdifferenz in Richtung des Schliessorgans und nimmt dieses entgegen dem und in Abhängigkeit vom Strömungsdruck der Messflüssigkeit mit, bis nach dem Zurücklegen einer bestimmten Strecke das starke Federorgan wirksam wird und das Schliessorgan schlagartig in die Sperrstellung drückt. Bei dem bekannten Umschaltventil befindet sich der Einlass für den Nebenstrom im Bereich des Einlasses für den Hauptstrom. Stromab von dem Einlass des Nebenstroms weist das Schliessorgan an seinem äusseren Umfang einen ringförmigen Teller auf, der mit einem Drosselring an der Innenseite des Gehäuses des Umschaltventils nach Art eines Drosselorgans zusammenarbeitet. Der Abstand zwischen dem Teller und dem Drosselring bildet eine ringförmige Drosselöffnung. Wenn nur der Nebenzähler läuft, befindet sich der Teller stromauf vor dem Drosselring, und, wenn Haupt- und Nebenzähler laufen, befindet sich der Teller stromab hinter dem Drosselring. Wenn das Schliessorgan in Richtung der Sperrstellung bewegt wird, ist einerseits die Kraft des schwachen Federorgans und andererseits eine dieser entgegenwirkende Kraft wirksam, die dem durch die Drosselung zwischen dem Teller und dem Drosselorgan entstehenden Druckverlust entspricht, bezogen auf den durch den Teller vergrösserten Gesamtquerschnitt des Schliessorgans. Der Abstand zwischen dem Teller und dem Drosselring ist so bemessen, dass eine Weiterbewegung des Schliessorgans in Sperrichtung erst dann erfolgt, wenn der Gesamtstrom von Haupt- und Nebenzähler unter den Wert gesunken ist, der zum Öffnen erforderlich war. Ist dies der Fall, so nähert sich der Teller dem Drosselring, das starke Federorgan wird zusätzlich zu dem schwachen Federorgan wirksam und erhöht dadurch schlagartig die Schliesskraft, der Teller passiert den Drosselring, der freie Durchgangsquerschnitt wird schlagartig erweitert, die den Federorganen entgegenwirkende Kraft fällt dadurch steil ab und ermöglicht ein beschleunigtes Schliessen des Umschaltventils. Das Öffnen des Umschaltventils erfolgt ebenfalls schlagartig, da mit einer Bewegung des Schliessorgans sofort eine Drosselung zwischen dem Teller und dem Drosselring erfolgt, so dass das Schliessorgan zwangsläufig durch die sich ergebende Erhöhung der Druckdifferenz mit seinem Teller den Drosselring passiert. Die Druckentlastung in der Offenstellung wird durch die Eliminierung der Kraft des starken Federorgans und durch die Vergrösserung der Wirkdruckfläche des Schliessorgans um die Fläche des ringförmigen Tellers erreicht. Hinsichtlich der Umschaltpunkte des Hauptzählers bei steigender und fallender Belastung arbeitet das bekannte Umschaltventil voll befriedigend, und der zulässige Messfehlerbereich wird auch während der Umschaltung nicht voll ausgenutzt.

Bei Verwendung von nur einer Feder muss diese so stark ausgelegt werden, dass das Schliessorgan so lange in der Sperrstellung bleibt, bis der Nebenzähler eine Durchflussstärke bringt, die über der unteren Messbereichsgrenze des Hauptzählers liegt, um die Fehlergrenzen auch während der Umschaltung einzuhalten. Beim Öffnen wird jedoch die Kraft der starken Feder noch erhöht, was einer wirksamen Druckentlastung zusätzlich entgegensteht. Soll diese über eine Vergrösserung des Querschnitts des Schliessorgans mittels des Tellers des Drosselorgans erfolgen, ist bei klein gehaltenem Teller die Druckentlastung nach dem Öffnen gering und die sich daraus zum Öffnen und Schliessen ergebende Notwendigkeit eines sehr kleinen Spalts zwischen dem Teller und dem Drosselring nachteilig. Eine Vergrösserung des Tellers bringt zwar eine bessere Druckentlastung nach dem Öffnen, erfordert jedoch ein grösseres und schwereres Gehäuse und der Querschnitt des Ringspalts kann wegen der erforderlichen Einhaltung der Umschaltpunkte nicht beliebig vergrössert werden, da der Ringspalt infolge des grösseren Umfangs des Tellers in Umfangsrichtung entsprechend länger wird. Das erfordert wiederum einen engeren Ringspalt, der die Einschwemmung und Ablagerung von Fremdkörpern begünstigt, was die freie Bewegung des Schliessorgans behindert und dieses blockiert. Schon bei nicht vermeidbaren, kleineren Ablagerungen an der zum Querschnitt relativ grossen Oberfläche derartiger Ringspalte ergeben sich deutliche Querschnittsminderungen, was wiederum eine nachteilige Verschiebung der Schaltpunkte zur Folge hat.

Demgegenüber ist es Aufgabe der vorliegenden Erfindung, trotz Verwendung nur eines und zwar eines schwachen Federorgans eine starke Haltekraft vor dem Öffnen des Schliessorgans, eine wirksame Druckentlastung in der Offenstellung und eine wieder schlagartig ansteigende Kraft in der letzten Schliessphase zu erreichen.

Zur Lösung dieser Aufgabe werden erfindungsgemäss die kennzeichnenden Merkmale von Anspruch 1 vorgeschlagen.

Hierdurch wird eine verbesserte Druckentlastung nach dem Öffnen des Schliessorgans erreicht. Der dynamische Strömungsmitteldruck der sich in der Hauptleitung bewegenden Strömung wird beim Schliessen durch den Schliessring aufgefangen, der radial beaufschlagt wird. Da der Druck des Hauptstroms kurz vor dem Öffnen und kurz vor dem Schliessen nicht mehr auf den gesamten Querschnitt des Schliessorgans wirksam ist, sondern nur noch auf einen schmalen Kreisring an dem Schliessring, reicht eine einzige, relativ schwache Feder aus. Der von dem Hauptstrom in der Sperrstellung des Schliessorgans beaufschlagte Kreisring an dem Schliessorgan ergibt sich nämlich dadurch, dass die im allgemeinen zahlreich vorgesehenen, sich im wesentlichen axial erstreckenden Kanäle in Richtung des Hauptstroms stets offen sind. Der Arbeitsraum des Stellgliedes steht in der Sperrstellung des Schliessorgans unter dem Druck des Neben- bzw. Gesamtstroms, so dass erst nach einer grösseren Druckerhöhung des Hauptstroms auf den Kreisring das Schliessorgan verstellt wird. Bereits nach geringer Verschiebung des Schliessorgans in Richtung seiner Offenstellung werden die Auslassöffnungen der Kanäle freigegeben und der Arbeitsraum des Stellgliedes mit dem Druck des Hauptstroms beaufschlagt, wodurch die Wirkfläche des Hauptstromdrucks erheblich nach innen vergrössert wird, so dass das Schliessorgan schlagartig die Offenstellung einnimmt, selbst wenn der Durchlass an der Gesamtstromseite offenbleibt. Dieser Effekt wird dadurch gesteigert, dass die Abdichtung an der Stirnseite des Schliessrings mindestens so lange aufrechterhalten bleibt, bis die Auslassöffnungen der Kanäle freigegeben werden. Dabei wird der Sitz des Dichtungselements unter Anlage an dem Schliessring gehalten, indem der Druck des Hauptstroms zwischen das Dichtungselement und den Lagerring gelangt, so dass das Dichtungselement mit seinem beweglichen Sitz der anfänglichen Verschiebung des Schliessorgans in Richtung der Offenstellung folgt. Die Druckentlastung zum schlagartigen Erreichen der Sperrstellung des Schliessorgans erfolgt durch das Schliessen der Auslassöffnungen der axialen Kanäle. Dadurch wird nämlich der von dem Druck des Hauptstroms beaufschlagte Wirkquerschnitt des Schliessorgans schlagartig auf den Kreisring reduziert. Dieser ist unabhängig davon, wie die Kanäle im einzelnen ausgebildet und angeordnet sind und ob an der Stirnseite des Schliessrings eine innen liegende Fase vorgesehen ist, sehr klein gegenüber der Wirkdruckfläche des Stellglieds. Der oder die sich im wesentlichen axial erstreckenden Kanäle können direkt an der Innenseite des Schliessrings oder an der nach aussen weisenden Oberfläche des Lagertellers ausgebildet sein. Im letzteren Falle sind die Auslassöffnungen der Kanäle in der Sperrstellung des Schliessorgans durch ein Axialventil mit elastischer, radialer Dichtungsfläche am äusseren Umfang des Arbeitsraums verschliessbar.

Der Nebenstrom kann an einer beliebigen Stelle stromab vom Schliessorgan zugeführt werden. Das Umschaltventil arbeitet mit einer einzigen, relativ schwachen Feder, die eine flache Federkennlinie aufweist und — sofern ein Drosselorgan vorgesehen ist —, kann der Ringspalt ziemlich gross gewählt werden. Dies hat den Vorteil, dass hinsichtlich der Lagerung und Führung des Schliessorgans grössere Fertigungstoleranzen bestehen. Ausserdem besteht nicht die Gefahr, dass sich im Drosselspalt Ablagerungen bilden.

Weitere vorteilhafte Ausgestaltungen der Erfindung sind in den übrigen Unteransprüchen unter Schutz gestellt.

In der Zeichnung sind Ausführungsbeispiele der Erfindung wiedergegeben, die anhand der nachfolgenden Beschreibung näher erläutert werden. Es zeigen:

Fig. 1 das Umschaltventil im Längsschnitt, wobei es in der oberen Hälfte geschlossen und in der unteren Hälfte geöffnet dargestellt ist,

Fig. 2 ein Detail des Schliessrings und des Dichtungselements,

Fig. 3 und 4 jeweils Schnitte gemäss Linie III-III in Fig. 2,

Fig. 5 ein Detail eines anderen Schliessrings und des Dichtungselements,

Fig. 6 einen Schnitt gemäss Linie VI-VI in Fig. 5,

Fig. 7 eine Detailansicht der Rückseite des Schliessorgans,

Fig. 8 einen Schnitt gemäss Linie VIII-VIII in Fig. 7,

Fig. 9 ein weiteres Ausführungsbeispiel des Umschaltventils im Längsschnitt, wobei es in der oberen Hälfte geschlossen und in der unteren Hälfte geöffnet dargestellt ist, und

Fig. 10 einen Schnitt gemäss Linie X-X in Fig. 9.

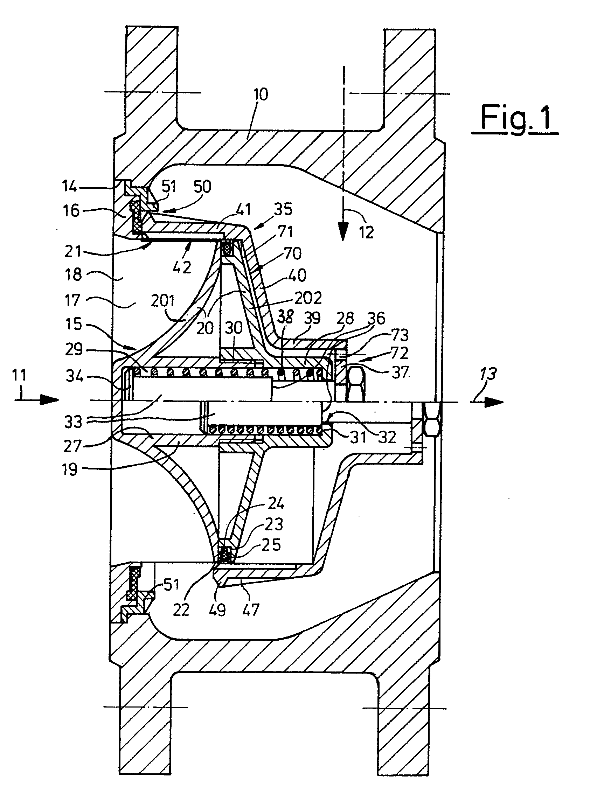

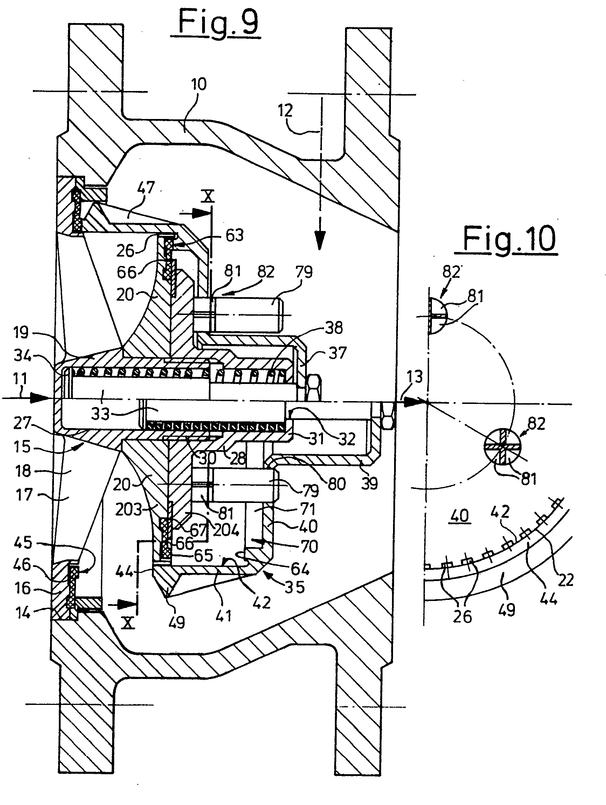

Das Umschaltventil hat ein Gehäuse 10, an das eine nicht dargestellte Hauptleitung angeschlossen ist, die von einem Hauptzähler einen Hauptstrom 11 zuführt. Ein Nebenstrom 12 wird von einem Nebenzähler über eine nicht dargestellte Nebenleitung geführt, die beispielsweise, wie in Fig. 1 und 9 angedeutet, in das Gehäuse 10 eingeleitet werden kann. Der Anschluss der Nebenleitung ist variabel und kann auch hinter dem Gehäuse 10 dem Gesamtstrom der Messflüssigkeit zugeordnet werden, der mit 13 bezeichnet ist. Die Nebenleitung zweigt vor dem Hauptzähler ab, hat ein federbelastetes Rückschaltventil und führt stets Messflüssigkeit.

Im Bereich des Anschlussflansches für die nicht dargestellte Hauptleitung hat das Gehäuse 10 eine Ausdrehung 14 zur Anordnung eines Lagerkörpers 15, der koaxial in das Gehäuse 10 einschiebbar ist. Der Lagerkörper 15 trägt das nachfolgend noch zu erläuternde Schliessorgan 35 und bildet so eine einbaufertige Einheit, die jederzeit auswechselbar ist und sich insbesondere in vorhandene Umschaltventilgehäuse etwa der Bauart nach dem DE-B Nr. 1960735 einsetzen lässt. Zu diesem Zweck hat der Lagerkörper 15 einen Lagerring 16, der in der Ausdrehung 14 befestigt werden kann und mit radial nach innen verlaufenden Rippen 17 versehen ist. Zwischen den Rippen 17 ist die Eintrittsöffnung 18 für den Hauptstrom 11 vorgesehen. Im Zentrum des Lagerkörpers 15 ist an den innen liegenden Enden der Rippen 17 ein Zylinder 19 angeordnet, der an den stromab weisenden Enden der Rippen 17 von einem Lagerteller 20 umschlossen ist, der bei dem Ausführungsbeispiel gemäss Fig. 1 aus zwei miteinander verbundenen Teilen 201 und 202 besteht. Diese sind Kunststoffformteile, die im Spritzgussverfahren hergestellt und bei 30 miteinander verschraubt sind und so zusammengehalten werden. Zwischen dem Lagerring 16 und dem Lagerteller 20 bzw. den Rippen 17 befinden sich radial nach aussen gerichtete Ventilöffnungen 21 für den Hauptstrom 11.

Der Lagerteller 20 hat an seinem Umfang bzw. seinen Teilen 201 und 202 eine zylindrische Lagerfläche 22, in der gemäss Fig. 1 eine Ringnut 23 für einen ovalen, elastomeren Dichtungsring 24 ausgebildet ist, der rittlings von einem Gleitring 25 übergriffen wird, der ein im wesentlichen U-förmiges Profil aufweist, das nach innen offen ist und radiale Aussenflächen an den Schenkeln aufweist. Mit diesen ist der Gleitring 25, der eine zylindrische Umfangsfläche hat radial nach aussen vorgespannt innerhalb der Ringnut 23 geführt. Mit seiner zylindrischen Umfangsfläche liegt der Gleitring 25 an der nach innen weisenden zylindrischen Oberfläche 42 eines Schliessrings 41 des Schliessorgans 35 an.

Der Lagertellerteil 201 hat einen in Richtung des Hauptstroms 11 abgeschlossenen Zylinderteil 27, und der Lagertellerteil 202 ist mit einem zentralen Zylinderteil 28 versehen, die durch die Verschraubung 30 zusammengehalten sind und einen Zylinderraum 29 bilden. Das stromab bzw. in Richtung des Gesamtstroms 13 weisende Ende des Zylinders 19 bzw. des Zylinderteils 28 ist durch einen Boden 31 mit einer konzentrischen Lagerbohrung 32 verschlossen. In der Lagerbohrung 32 ist ein Kolben 33 des Schliessorgans 35 des Umschaltventils axial hin- und herbewegbar geführt. Der Kolben 33 weist im Bereich des Zylinderteils 27 einen Kolbenteller 34 auf und hat im Bereich des Zylinderteils 28 einen Bund 36, der in der maximalen Offenstellung des Schliessorgans 35 an dem Boden 31 anliegt. Auf diese Weise wirkt der Bund 36 als Hubbegrenzer. Zwischen dem Kolbenteller 34 und dem Boden 31 ist eine Schraubendruckfeder 38 angeordnet, die den Kolben 33 umschliesst und relativ schwach ausgelegt ist.

Das Schliessorgan 35 ist als glockenartiger Rotationskörper ausgelegt, der ein Kunststoffspritzteil sein kann. Das Schliessorgan 35 hat einen zentralen Rückwandabschnitt 37, der mit dem Kolben 33 verschraubt ist und einen etwas grösseren Durchmesser hat als der Zylinderteil 28. Dieser Zylinderteil 28 wird von einem zylindrischen Abschnitt 39 der Rückwand 40 des Schliessorgans 35 übergriffen. Der Abschnitt 39 verbindet den Rückwandabschnitt 37 mit der eigentlichen Rückwand 40.

An den äusseren Umfangsrand der Rückwand 40 schliesst sich der Schliessring 41 an, der zylindrisch ausgebildet ist und den Lagerteller 20 übergreift. Der Schliessring 41 hat eine nach innen weisende, zylindrische Oberfläche 42, die mit der Lagerfläche 22 bzw. dem Gleitring 25 in Eingriff steht.

An der Stirnseite 44 des Schliessrings 41 ist zweckmässigerweise eine Fase 43 ausgebildet, die nach innen in Richtung der Oberfläche 42 zurückspringt. Die sonst radial ausgebildete Stirnseite 44 ist gegenüber einem ringförmigen, elastisch nachgiebigen Sitz 45 axial verstellbar, der an einem elastischen Dichtungselement 46 ausgebildet ist. Das Dichtungselement 46 ist an dem Lagerring 16 angeordnet und derart ausgebildet, dass beim Öffnen des Umschaltventils die Stirnseite 44 des Schliessrings 41 länger mit dem ringförmigen Sitz 45 in Eingriff steht, als der ringförmige Sitz 45 beim Schliessen des Umschaltventils mit der Stirnseite 44 in Eingriff kommt. Hierzu kann das Dichtungselement 46 auf der vom Sitz 45 abgewandten Seite von dem Druck des Hauptstroms beaufschlagt werden, der unmittelbar oder über einen Verbindungskanal zugeführt werden kann. Bei beiden Ausführungsbeispielen ist das Dichtungselement 46 zwischen dem Lagerring 16 und einem Gehäusering 48 in der Ausdrehung 14 des Gehäuses 10 gehalten.

Der zylindrische Schliessring 41 weist im Bereich der Stirnseite 44 am äusseren Umfang einen tellerförmigen Ansatz 49 auf, der durch Verstärkungsrippen 47 gegenüber dem Schliessring 41 gesichert ist. Der radiale Teller 49 und ein an dem Gehäuse 10 vorgesehener Drosselring 51 bilden ein Drosselorgan 50, wobei der Drosselring 51 an einem Einschub 52 ausgebildet ist, der einstückig mit dem Gehäusering 48 ausgebildet ist.

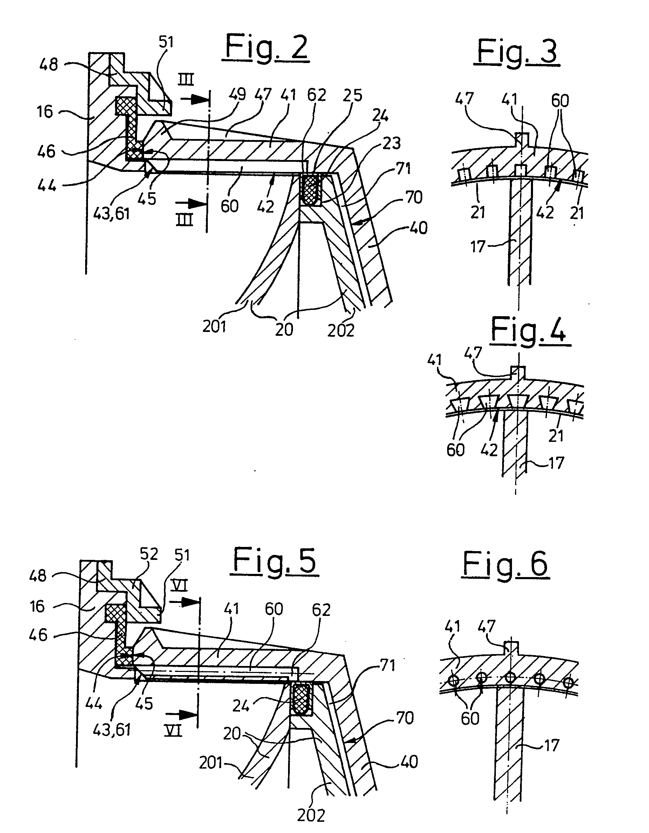

Bei den in Fig. 1 bis 6 dargestellten Ausführungsbeispielen weist der Schliessring 41 mehrere, sich axial erstreckende Kanäle 60 auf. Diese haben im Bereich der Fase 43 eine stets offene Einlassöffnung 61 und bei 62 eine Auslassöffnung, die in der Sperrstellung des Schliessorgans 35 durch den Gleitring 25 verschlossen ist. Wie Fig. 3, 4 und 6 deutlich machen, sind die axialen Kanäle 60 unter gleichen Winkelabständen über den Umfang des Schliessrings 41 verteilt. Die Kanäle 60 können sich exakt axial erstrecken òder schraubenlinienförmig angeordnet sein. Bei dem Ausführungsbeispiel gemäss Fig. 3 sind die Kanäle 60 in Richtung der Oberfläche 42 offene Nuten. Gemäss Fig. 4 ist der Querschnitt der Nuten 60 schwalbenschwanzförmig, wobei in der nach innen weisenden Oberfläche 42 des Schliessrings 41 relativ schmale Schlitze vorgesehen sind.

Bei dem Ausführungsbeispiel gemäss Fig. 5 und 6 sind die Kanäle 60 als axiale Bohrungen ausgebildet, die im Bereich der nach innen weisenden Oberfläche 42 geschlossen sind. Die Auslassöffnung 62 ist jeweils durch eine radiale Bohrung gebildet.

Die Auslassöffnungen 62 sind derart angeordnet, dass sie bereits nach geringer Verschiebung des Schliessorgans 35 in Richtung der Offenstellung mit einem dem Schliessorgan 35 zugeordneten Arbeitsraum 71 eines hydraulischen Stellgliedes 70 verbunden werden. Der Arbeitsraum 71 wird im wesentlichen begrenzt durch den feststehenden Lagertellerteil 202 und den Zylinderteil 28 sowie die nach Art eines Kolbens bewegbaren Teile des Schliessorgans 35, nämlich die Rückwand 40, den zylindrischen Abschnitt 39 und den zentralen Rückwandabschnitt 37.

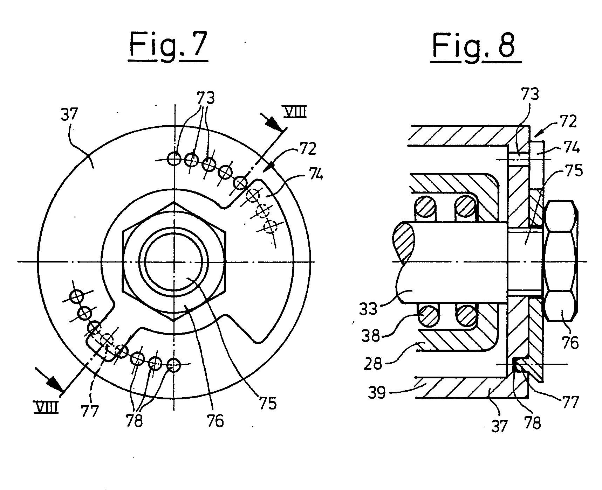

Der zentrale Rückwandabschnitt 37 weist den als Drosselöffnung wirkenden, voreinstellbaren Durchlass 72 für den Volumenausgleich auf. Zu diesem Zweck sind in dem Rückwandabschnitt 37 mehrere axiale Durchgangsbohrungen 73 (Fig. 7) vorgesehen, die durch ein plattenförmiges Element 74 abdeckbar sind, das auf einem Zapfen 75 an dem Kolben 33 schwenkbar gelagert und durch eine Schraube 76 fixierbar ist. Das plattenförmige Element 74 hat auf der den Durchgangsbohrungen 73 gegenüberliegenden Seite einen Stift 77, der wahlweise in Sackbohrungen 78 einsetzbar ist, wodurch der Durchlass 72 durch die Summe der offenen Durchgangsbohrungen 73 voreinstellbar ist. Die Voreinstellung, die auch zu Eichzwecken dient, wird so ausgeführt, dass die Summe der Querschnittsflächen der Kanäle 60 einen grösseren Strömungsquerschnitt ergibt als die der offenen Durchgangsbohrungen 73.

Bei dem Ausführungsbeispiel gemäss Fig. 9 und 10 ist der Lagerteller 20 etwas anders aufgebaut. Der Zylinderteil 27 ist von einer gesonderten Lagerscheibe 203 umschlossen, an der eine Lagerscheibe 204 anliegt, die mit dem Zylinderteil 28 einstückig ausgebildet ist. Die Lagerscheiben 203 und 204 bilden den Lagerteller, wobei in der nach aussen weisenden Oberfläche 22 der Lagerscheibe 203 als Kanäle mehrere, im wesentlichen axial verlaufende Nuten 26 vorgesehen sind. Die Nuten 26 sind durchgehend ausgebildet, wobei die nach aussen weisende Oberfläche 22 des Lagertellers 20 mit der glatten, nach innen weisenden Oberfläche 42 des Schliessrings 41 in Eingriff steht. An der Auslassseite der Nuten 26 ist ein Axialventil 63 angeordnet, dessen Ventilkörper eine radiale Fläche 64 an der Rückwand 40 aufweist. Die radiale Fläche 64 arbeitet in der Sperrstellung mit einer elastischen, radialen Dichtungsfläche 65 zusammen, die an einem elastischen Dichtungselement 66 ausgebildet ist, das einen ähnlichen Aufbau aufweist wie das Dichtungselement 46. Das Dichtungselement 66 ist mittels einer Ringscheibe 67 zwischen den beiden Lagerscheiben 203 und 204 gehalten. Die stromauf weisende Rückseite des Dichtungselements 66 steht über die Nuten 26 ständig unter dem Druck des Hauptstroms 11.

An der in Richtung des Gesamtstroms 13 weisenden Oberfläche der Lagerscheibe 204 sind zylindrische Kolben 79 angeordnet, die in Durchgangsbohrungen 80 der Rückwand 40 geführt sind. Die Kolben 79 weisen unmittelbar neben der Lagerscheibe 204 Durchbrüche 81 auf, die zusammen mit den Durchgangsbohrungen 80 und den Kolben 79 verschliessbare Durchlässe 82 bilden. Die verschliessbaren Durchlässe 82 haben zusammen einen grösseren Strömungsquerschnitt als die Summe der Kanäle 26 und stehen im geöffneten Zustand, d.h. in der Sperrstellung des Umschaltventils, mit dem Nebenstrom 12 in Verbindung, so dass der Arbeitsraum 71 des hydraulischen Stellgliedes 70 von dem Druck des Nebenstroms beaufschlagt ist.

In der Sperrstellung dichten die Stirnseite 44 gegenüber dem Dichtungselement 46 und die radiale Dichtungsfläche 64 gegenüber dem Dichtungselement 66 ab. Bei einer Zunahme des Durchflusses wirkt der durch den Nebenzähler entstehende Druckverlust auf einen Kreisringquerschnitt, der zwischen dem Innenrand der Flächen 44/45 und dem Aussenrand der Flächen 64/65 liegt. Bei Zunahme des Drucks des Hauptstroms 11 wird das Schliessorgan 35 stromab bewegt, wobei die Durchgangsbohrungen 80 mit den zylindrischen Kolben 79 die Durchlässe 82 weitgehend verschliessen, so dass sich der Druck des Hauptstroms 11 nach dem Öffnen des Axialventils 63 schnell in dem Arbeitsraum 71 aufbaut und die Rückwand 40 von dem Lagerteller 20 entfernt. Dabei wird der Dichtungskontakt 44/45 zunächst noch aufrechterhalten. Kurz vor dem Schliessen, wenn der tellerförmige Ansatz 49 die vordere Kante des Drosselrings 51 erreicht, wird das Drosselorgan 50 wirksam. Die Wirkung des hydraulischen Stellgliedes 70 wird dadurch eliminiert, dass die Durchgangsbohrungen 80 über die Durchbrüche 81 geschoben werden und diese freigeben. Dadurch kann die durch die Nuten 26 nachströmende Messflüssigkeit des Hauptstroms 11 frei aus dem Arbeitsraum 71 entweichen, wodurch die Vergrösserung des Wirkquerschnitts in Form der Beaufschlagung der Rückwand 40 unmittelbar nach dem Öffnen aufgehoben wird. Dadurch ergibt sich kurz vor dem Erreichen der Sperrstellung eine Entlastung, so dass das Schliessorgan 35 schlagartig in die Sperrstellung gedrückt wird. Auch hier kann eine relativ schwache Feder 38 verwendet werden, da diese nur maximal einem Wirkdruck von 0,2 bar auf die Kreisringfläche zwischen dem Innenrand der Flächen 44/45 und dem Aussenrand der Flächen 64/65 standhalten muss. Diese Ventile 44/45 und 64/65 sind so ausgelegt, dass beim Öffnen des Umschaltventils das Axialventil 63 vor dem Ventil 44/45 den Durchfluss für den Hauptstrom 11 freigibt.

Die Durchflussstärke des Volumenstroms beim Öffnen des Umschaltventils wird bestimmt durch den Druckverlust der Nebenzählerleitung inkl. Nebenzähler und die Kraft der verwendeten Feder 38 gegenüber dem auf die Grösse der Fläche des anfangs beaufschlagten Kreisrings bezogenen Hauptstromdruck.

Die in die Nebenzählerleitung eingebaute federbelastete Rückflussverhinderung ist so ausgelegt, dass ihr Wirkdruck in Richtung Schliessen gleich oder grösser ist als der auf das Schliessorgan ausgeübte, wenn das hydraulische Stellglied 70 vom Druck des Hauptstroms 11 beaufschlagt wird. Dadurch wird ein für die Einhaltung der Messfehler im Umschaltbereich nachteiliges Mitlaufen des Nebenzählers kurz nach dem Öffnen und kurz vor dem Schliessen ausgeschlossen.

Wenn ein Drosselorgan 50 vorgesehen ist, ist sein Drosselspalt so ausgelegt, dass der beim Öffnen fliessende Volumenstrom das Schliessorgan 35 entgegen der Kraft der Feder 38 so weit stromab bewegt, bis der tellerförmige Ansatz 49 stromab des Drosselrings 51 zu liegen kommt. Das Schliessen des Umschaltventils kann erst erfolgen, wenn der tellerförmige Ansatz 49 wieder in diesen Ring 51 eintaucht, d.h. wenn der Gesamtdurchfluss so weit abgesunken ist, dass der im Drosselorgan 50 entstehende Druckverlust und die dadurch entstehende, stromab gerichtete Kraft kleiner wird als die auf das Schliessorgan wirkende, stromauf gerichtete Federkraft.

Eine Veränderung des Durchflusses beim Schliessen ist durch zusätzliches Öffnen oder Verschliessen der Durchgangsbohrungen 73 möglich. Durch das zusätzliche Öffnen einer solchen Bohrung kann kurz vor dem Schliessen zusätzlich zu dem durch das Drosselorgan 50 fliessenden Volumenstrom auch durch die offenen Kanäle 60 und über den Arbeitsraum des Stellgliedes 70 Messflüssigkeit abfliessen und den Gesamtdurchfluss vor dem Schliessen erhöhen, ohne den Druckverlust im Drosselorgan zu steigern.

## Patentansprüche

1. Umschaltventil für einen Verbundzähler, der einen von einem Hauptstrom beaufschlagten Hauptzähler und einen von einem Nebenstrom beaufschlagten Nebenzähler aufweist, wobei ein innerhalb des Umschaltventilgehäuses (10) in axialer Richtung bewegbares Schliessorgan (35) unmittelbar und über ein hydraulisches Stellglied (70) durch den Strömungsdruck der Messflüssigkeit und einer dieser entgegenwirkenden Kraft eines Federorgans (38) verstellbar ist sowie in der letzten Schliessphase der Hauptstrom stark gedrosselt wird, dadurch gekennzeichnet, dass innerhalb des Gehäuses (10) und unter Abstand von einer Eintrittsöffnung (18) des Hauptstroms (11) und unter Freilassung von radial nach aussen gerichteten Ventilöffnungen (21) für den Hauptstrom (11) ein Lagerteller (20) angeordnet ist, auf dem ein an dem Schliessorgan (35) angeordneter Schliessring (41) zum Abdecken der Ventiklöffnungen (21) axial hin- und herbewegbar geführt ist, und dass dem Schliessring (41) mindestens ein sich im wesentlichen axial erstreckender Kanal (60; 26) zugeordnet ist, dessen Einlassöffnung (61) in Richtung des Hauptstroms (11) stets offen ist und dessen Auslassöffnung (62) in der Sperrstellung des Schliessorgans (35) durch ein Ventilverschlussteil (24, 25; 63) am Lagerteller (20) geschlossen ist, jedoch bereits nach geringer Verschiebung des Schliessorgans (35) in Richtung seiner Offenstellung vom Ventilverschlussteil (24, 25; 63) zu einem dem Schliessorgan (35) zugeordneten, mit dem Neben- bzw. Gesamtstrom über eine Drosselöffnung (72) in Verbindung stehenden Arbeitsraum (71) des hydraulischen Stellgliedes (70) geöffnet wird, durch dessen von der Druckdifferenz zwischen Haupt- und Neben- bzw. Gesamtstrom abhängige Volumenänderungen das Schliessorgan (35) verstellbar ist.

2. Ventil nach Anspruch 1, dadurch gekennzeichnet, dass das Schliessorgan (35) mit dem auf dem Lagerteller (20) geführten Schliessring (41) und einer im wesentlichen radialen Rückwand (40), die den Arbeitsraum (71) umschliessen, im wesentlichen glockenartig ausgebildet ist.

3. Ventil nach einem der Ansprüche 1 oder 2, dadurch gekennzeichnet, dass die Drosselöffnung (72) in der Rückwand (40) des Schliessorgans (35) angeordnet und voreinstellbar ist.

4. Ventil nach einem der Ansprüche 1 oder 2, dadurch gekennzeichnet, dass die Rückwand (40) des Schliessorgans (35) einen verschliessbaren Durchlass (82) aufweist, der höchstens so lange geöffnet ist, wie der die Verbindung mit dem Hauptstrom (11) herstellende Kanal (60; 26) geschlossen ist.

5. Ventil nach mindestens einem der Ansprüche 1 bis 3, dadurch gekennzeichnet, dass der bzw. die Kanäle (60) einen grösseren Strömungsquerschnitt aufweisen als die voreinstellbare Drosselöffnung (72).

6. Ventil nach mindestens einem der Ansprüche 1 bis 3 und 5, dadurch gekennzeichnet, dass in der nach innen weisenden Oberfläche (42) des Schliessrings (41) als Kanäle (60) mehrere, im wesentlichen axial verlaufende Nuten ausgebildet sind (Fig. 3, 4).

7. Ventil nach Anspruch 6, dadurch gekennzeichnet, dass die Nuten (60) schwalbenschwanzförmig ausgebildet sind, wobei in der nach innen weisenden Oberfläche (42) des Schliessrings (41) relativ schmale Schlitze vorgesehen sind.

8. Ventil nach mindestens einem der Ansprüche 1 bis 3 und 5, dadurch gekennzeichnet, dass der Schliessring (41) als Kanäle mehrere, im wesentlichen axial verlaufende Bohrungen mit jeweils einer Einlass- und einer Auslassöffnung (61, 62) aufweist.

9. Ventil nach mindestens einem der Ansprüche 5 bis 8, dadurch gekennzeichnet, dass am nach innen weisenden, mit den Einlassöffnungen (61) der Kanäle (60) versehenen Rand des Schliessrings (41) eine nach innen zurückspringende Fase (43) vorgesehen ist.

10. Ventil nach mindestens einem der Ansprüche 1 bis 9, dadurch gekennzeichnet, dass die Eintrittsöffnung (18) in einem an dem Gehäuse (10) befestigten Lagerring (16) eines Lagerkörpers (15) vorgesehen ist, der nach innen vorspringende Rippen (17) aufweist, an denen in axialer Richtung und stromab gegenüber dem Lagerring (16) versetzt der Lagerteller (20) angeordnet ist.

11. Ventil nach mindestens einem der Ansprüche 1 bis 10, dadurch gekennzeichnet, dass zwischen dem Lagerring (16) und einem Gehäusering (48) ein ringförmiges, elastisches Dichtungselement (46) gehalten ist, das einen ringförmigen, elastisch nachgiebigen Sitz (45) für eine Stirnseite (44) des Schliessrings (41) des Schliessorgans (35) aufweist und dessen von dem Sitz (45) abgewandte Seite von dem Druck des Hauptstroms (11) beaufschlagbar ist, so dass beim Öffnen des Umschaltventils die Stirnseite (44) mit dem ringförmigen Sitz (45) länger in Eingriff steht, als dieser beim Schliessen des Umschaltventils mit der. Stirnseite (44) in Eingriff kommt.

12. Ventil nach mindestens einem der Ansprüche 1 bis 11, dadurch gekennzeichnet, dass am Umfang des Lagertellers (20) ein Dichtungsring (24) mit einem Gleitring (25) vorgesehen sind, die in der Sperrstellung des Schliessorgans (35) die Auslassöffnungen (62) der Kanäle (60) abdecken.

13. Ventil nach mindestens einem der Ansprüche 1, 2, 4, 10 oder 11, dadurch gekennzeichnet, dass in der nach aussen weisenden Oberfläche (22) des Lagertellers (20) als Kanäle mehrere, im wesentlichen axial verlaufende Nuten (26) ausgebildet sind, deren Auslassöffnungen in der Sperrstellung des Schliessorgans (35) durch ein Axialventil (63) mit elastischer, radialer Dichtungsfläche am äusseren Umfang des Arbeitsraums (71) des hydraulischen Stellgliedes (70) verschlossen sind.

14. Ventil nach mindestens einem der Ansprüche 1 bis 13, dadurch gekennzeichnet, dass der Lagerkörper (15) einen zentralen Zylinder (19) aufweist, in dem ein Kolben (33) axial hin- und herbewegbar geführt ist, die Rückwand (40) des Schliessorgans (35) mit dem Kolben (33) verbunden ist und zwischen einem Kolbenteller (34) des Kolbens (33) und einem stromab weisenden Boden (31) des Zylinders (19) eine Druckfeder (38) angeordnet ist, die die dem Strömungsdruck der Messflüssigkeit entgegenwirkende Kraft aufbringt.

15. Ventil nach Anspruch 14, dadurch gekennzeichnet, dass die Druckfeder (38) als den Kolben (33) umschliessende Schraubenfeder ausgebildet ist.

16. Ventil nach einem der Ansprüche 14 oder 15, dadurch gekennzeichnet, dass der Kolben (33) einen Bund (36) aufweist, der in der maximalen Offenstellung des Schliessorgans (35) an dem stromab weisenden Boden (31) des Zylinders (19) anliegt.

17. Ventil nach mindestens einem der Ansprüche 1 bis 16, dadurch gekennzeichnet, dass am äusseren Umfang und im Bereich der Stirnseite (44) des Schliessrings (41) des Schliessorgans (35) ein tellerförmiger Ansatz (49) vorgesehen ist, der gegenüber einem an dem Gehäuse (10) befestigten Drosselring (51) verstellbar ist.

18. Ventil nach Anspruch 17, dadurch gekennzeichnet, dass der Drosselring (51) eine zylindrische Innenfläche aufweist.

19. Ventil nach einem der Ansprüche 17 oder 18, dadurch gekennzeichnet, dass der Drosselring (51) an einem axial in das Gehäuse (10) einsetzbaren Einschub (52) ausgebildet ist, der aus einem Stück mit einem Gehäusering (48) besteht, der dem Lagerring (16) des Lagerkörpers (15) zugeordnet ist.

20. Ventil nach den Ansprüchen 4 und 13, dadurch gekennzeichnet, dass der bzw. die Kanäle (26) einen kleineren Strömungsquerschnitt aufweisen als der verschliessbare Durchlass (82).

## Claims

1. A change-over valve for a compound meter which has a main meter acted upon by a main flow and a secondary meter acted upon by a secondary flow, wherein a closure member (35) movable axially inside the change-over valve housing (10) is actuatable directly by the flow pressure of the metered fluid and, by way of a hydraulic control member (70), by the flow pressure of the metered fluid and by a force of a spring member (38) acting against the flow pressure of the metered fluid, and wherein the main flow is substantially restricted in the final closing stage, characterised in that a bearing plate (20) is disposed inside the housing (10) at a distance from an inlet opening (18) of the main flow (11), thus leaving free radially outwardly directed valve openings (21) for the main flow (11), a closure ring (41) arranged on the closure member (35) for covering the valve openings (21) being guided for axial reciprocating movement with respect to said bearing plate, and in that at least one substantially axially extending duct (60; 26) is associated with the closure ring (41), the inlet opening (61) of which duct is always open in the direction of the main flow (11) and the outlet opening (62) of which is closed in the sealing position of the closure member (35) by a valve closing part (24, 25; 63) on the bearing plate (20), but is opened from the valve closing part (24, 25; 63) to a working chamber (71) for the hydraulic control member (70) after only slight displacement of the closure member (35) towards its open position, which working chamber is associated with the closure member (35) and communicates with the secondary or total flow via a restrictor opening (72), the closure member (35) being adjustable by variations in the volume of the working chamber depending on the pressure difference between main and secondary or total flow.

2. A valve according to Claim 1, characterised in that the closure member (35) is substantially bell-shaped, with the closure ring (41) guided on the bearing plate (20) and a substantially radial rear wall (40) which enclose the working chamber (71).

3. A valve according to one of Claims 1 or 2, characterised in that the restrictor opening (72) is arranged and can be preset in the rear wall (40) of the closure member (35).

4. A valve according to one of Claims 1 or 2, characterised in that the rear wall (40) of the closure member (35) has a closable passage (82) which, at most, is open for as long as the duct (60; 26) effecting the connection with the main flow (11) is closed.

5. A valve according to at least one of Claims 1 to 3, characterised in that the duct or ducts (60) have a greater flow cross-section than that of the presettable restrictor opening (72).

6. A valve according to at least one of Claims 1 to 3 and 5, characterised in that, in the inwardly facing surface (42) of the closure ring (41), a plurality of substantially axially extending grooves are provided as ducts (60) (Fig. 3, 4).

7. A valve according to Claim 6, characterised in that the grooves (60) are of dovetail-like shape, relatively narrow slots being provided in the inwardly facing surface (42) of the closure ring (41).

8. A valve according to at least one of Claims 1 to 3 and 5, characterised in that as ducts the closure ring (41) has a plurality of substantially axially extending bores having respectively an inlet opening and an outlet opening (61, 62).

9. A valve according to at least one of Claims 5 to 8, characterised in that an inwardly extending bevel (43) is provided on the inwardly facing edge of the closure ring (41) provided with the inlet openings (61) of the ducts (60).

10. A valve according to at least one of Claims 1 to 9, characterised in that the inlet opening (18) is provided in a bearing ring (16) of a bearing body (15) which is secured to the housing (10) and which has inwardly projecting webs (17) on which the bearing plate (20) is arranged offset in axial direction and downstream relative to the bearing ring (16).

11. A valve according to at least one of Claims 1 to 10, characterised in that an annular resilient sealing element (46) is retained between the bearing ring (16) and a housing ring (48), which sealing element has an annular elastically resilient seating (45) for an end face (44) of the closure ring (41) of the closure member (35), and the side of which remote from the sealing (45) can be acted upon by the pressure of the main flow (11), so that upon opening the change-over valve the end face (44) is in engagement with the annular seating (45) for a longer time than when it comes into engagement with the end face (44) upon closing the change-over valve.

12. A valve according to at least one of Claims 1 to 11, characterised in that, on the periphery of the bearing plate (20), there is provided a sealing ring (24) with a slide ring (25) which, in the sealing position of the closure member (35), covers the outlet openings (62) of the ducts (60).

13. A valve according to at least one of Claims 1, 2, 4, 10 or 11, characterised in that a plurality of substantially axially extending grooves (26) are formed as ducts in the outwardly facing surface (22) of the bearing plate (20), the outlet openings of which grooves are closed in the sealing position of the closure member (35) by an axial valve (63) with elastic radial sealing surface on the outer periphery of the working chamber (71) of the hydraulic control element (70).

14. A valve according to at least one of Claims 1 to 13, characterised in that the bearing body (15) has a central cylinder (19), in which a piston (33) is guided axially for reciprocating movement, the rear wall (40) of the closure member (35) is connected to the piston (33) and a compression spring (38) is arranged between a piston disc (34) of the piston (33) and a downstream-facing base (31) of the cylinder (19), which compression spring applies the force acting against the flow pressure of the metered fluid.

15. A valve according to Claim 14, characterised in that the compression spring (38) is designed as a coilspring surrounding the piston (33).

16. A valve according to one of Claims 14 or 15, characterised in that the piston (33) has a collar (36) which, in the maximum open position of the closure member (35) abuts against the downstream-facing base (31) of the cylinder (19).

17. A valve according to at least one of Claims 1 to 16, characterised in that, on the outer periphery and in the vicinity of the end face (44) of the closure ring (41) of the closure member (35), there is provided a disc-shaped extension (49) which is adjustable relative to a restrictor ring (51) secured to the housing (10).

18. A valve according to Claim 17, characterised in that the restrictor ring (51) has a cylindrical inner surface.

19. A valve according to one of Claims 17 or 18, characterised in that the restrictor ring (51) is formed on an insert unit (52) which is insertable axially into the housing (10), which comprises a part with a housing ring (48) and which is associated with the bearing ring (16) of the bearing body (15).

20. A valve according to Claims 4 and 13, characterised in that the duct or ducts (26) have a smaller flow cross-section than the closable passage (82).

**Revendications**

1. Valve de commutation pour compteur combiné qui présente un compteur principal subissant l'action d'un courant principal et un compteur secondaire subissant l'action d'un courant secondaire, un obturateur (35) mobile en direction axiale à l'intérieur du corps (10) de la valve de commutation pouvant être réglé directement et, par l'intermédiaire d'un organe hydraulique de réglage (70), par la pression d'écoulement du liquide à mesurer et par une force antagoniste d'un organe élastique (38), le courant principal étant fortement étranglé à la dernière phase de fermeture, caractérisée par le fait qu'à l'intérieur du corps (10) et à quelque distance d'une ouverture d'entrée (18) du courant principal (11) est disposé, tout en ménageant des ouvertures de valve (21) dirigées radialement vers l'extérieur pour le courant principal (11), un plateau de palier (20) sur lequel un anneau de fermeture (41) disposé sur l'obturateur (35) est guidé axialement de manière à pouvoir aller et venir pour recouvrir les ouvertures de valve (21), et qu'à l'anneau de fermeture (41) est adjoint au moins un canal (60; 26) pratiquement dirigé axialement, dont l'ouverture d'entrée (61) est toujours ouverte dans le sens du courant principal (11) et dont l'orifice de sortie (62) est fermé, dans la position de blocage de l'obturateur (35), par une partie de fermeture de valve (24, 25; 63) du plateau de palier (20), mais est ouvert, déjà après un léger coulissement de l'obturateur (35) en direction de sa position ouverte, vers une cavité de travail (71) de l'organe hydraulique de réglage (70), adjointe à l'obturateur (35) et communiquant avec le courant secondaire ou le courant total par l'intermédiaire d'une ouverture d'étranglement (72), la variation de volume de ladite cavité de travail, dépendant de la différence de pression entre courant principal et secondaire ou courant total, pouvant régler l'obturateur (35).

2. Valve selon la revendication 1, caractérisée par le fait que l'obturateur (35), avec l'anneau de fermeture (41) guidé sur le plateau de palier (20) et une paroi postérieure (40) pratiquement radiale qui délimitent la cavité de travail (71), est pratiquement en forme de cloche.

3. Valve selon l'une des revendications 1 ou 2, caractérisée par le fait que l'ouverture d'étranglement (72) est disposée dans la paroi postérieure (40) de l'obturateur (35) et est préréglable.

4. Valve selon l'une des revendications 1 ou 2, caractérisée par le fait que la paroi postérieure (40) de l'obturateur (35) présente un passage (82), pouvant être fermé, qui est ouvert au maximum aussi longtemps que le canal (60; 26) établissant la liaison avec le courant principal (11) est fermé.

5. Valve selon l'une des revendications 1 à 3, caractérisée par le fait que le ou les canaux (60) présentent une plus grande section d'écoulement que l'ouverture d'étranglement préréglable (72).

6. Valve selon au moins l'une des revendications 1 à 3 et 5, caractérisée par le fait que dans la surface tournée vers l'intérieur (42) de l'anneau de fermeture (41) sont formées, comme canaux (60), plusieurs rainures pratiquement dirigées axialement (fig. 3, 4).

7. Valve selon la revendication 6, caractérisée par le fait que les rainures (60) sont en forme de queue-d'aronde, des fentes relativement étroites étant prévues dans la surface tournée vers l'intérieur (42) de l'anneau de fermeture (41).

8. Valve selon au moins l'une des revendications 1 à 3 et 5, caractérisée par le fait que l'anneau de fermeture (41) présente, comme canaux, plusieurs perforations pratiquement dirigées axialement, présentant chacune une ouverture d'entrée et une ouverture de sortie (61, 62).

9. Valve selon au moins l'une des revendications 5 à 8, caractérisée par le fait qu'au bord tourné vers l'intérieur de l'anneau de fermeture (41), muni des ouvertures d'entrée (61) des canaux (60), est prévu un biseau (43) en retrait vers l'intérieur.

10. Valve selon au moins l'une des revendications 1 à 9, caractérisée par le fait que l'ouverture d'entrée (18) est prévue dans un anneau de palier (16), fixé au corps (10), d'un corps de palier (15) qui présente des nervures (17) faisant saillie vers l'intérieur, sur lesquelles le plateau de palier (20) est disposé avec décalage en direction axiale et vers l'aval relativement à l'anneau de palier (16).

11. Valve selon au moins l'une des revendications 1 à 10, caractérisée par le fait qu'entre l'anneau de palier (16) et un anneau (48) du corps est retenu un élément d'étanchéité annulaire élastique (46) qui présente un siège annulaire souple et élastique (45) pour un côté frontal (44) de l'anneau de fermeture (41) de l'obturateur (35), et dont le côté opposé au siège (45) peut être soumis à la pression du courant principal (11) de sorte que, lors de l'ouverture de la valve de commutation, le côté frontal (44) est plus longtemps en coopération avec le siège annulaire (45) que celui-ci n'entre en coopération avec le côté frontal (44) lors de la fermeture de la valve de commutation.

12. Valve selon au moins l'une des revendications 1 à 11, caractérisée par le fait qu'à la circonférence du plateau de palier (20) sont prévus un anneau d'étanchéité (24) et un anneau de glissement (25) qui, dans la position de blocage de l'obturateur (35), recouvrent les ouvertures de sortie (62) des canaux (60).

13. Valve selon au moins l'une des revendications 1, 2, 4, 10 ou 11, caractérisée par le fait que dans la surface tournée vers l'extérieur (22) du plateau de palier (20) sont formées, comme canaux, plusieurs rainures (26) pratiquement dirigées axialement, dont les ouvertures de sortie, dans la position de blocage de l'obturateur (35), sont fermées par une valve axiale (63) présentant une surface radiale élastique d'étanchéité à la circonférence extérieure de la cavité de travail (71) de l'organe hydraulique de réglage (70).

14. Valve selon au moins l'une des revendications 1 à 13, caractérisée par le fait que le corps de palier (15) présente un cylindre central (19) dans lequel un piston (33) est guidé de manière à pouvoir aller et venir, que la paroi postérieure (40) de l'obturateur (35) est reliée au piston (33) et qu'entre un plateau de piston (34) du piston (33) et un fond tourné vers l'aval (31) du cylindre (19) est disposé un ressort de compression (38) qui applique la force s'opposant à la pression d'écoulement du liquide à mesurer.

15. Valve selon la revendication 14, caractérisée par le fait que le ressort de compression (38) est conçu sous forme de ressort à boudin entourant le piston (33).

16. Valve selon l'une des revendications 14 ou 15, caractérisé par le fait que le piston (33) présente un collet (36) qui, dans la position d'ouverture maximale de l'obturateur (35), s'applique contre le fond tourné vers l'aval (31) du cylindre (19).

17. Valve selon au moins l'une des revendications 1 à 16, caractérisée par le fait qu'à la circonférence extérieure et dans la région du côté frontal (44) de l'anneau de fermeture (41) de l'obturateur (35) est prévu un appendice en forme de plateau (49) qui est réglable relativement à un anneau d'étranglement (51) fixé au corps (10).

18. Valve selon la revendication 17, caractérisée par le fait que l'anneau d'étranglement (51) présente une surface intérieure cylindrique.

19. Valve selon l'une des revendications 17 ou 18, caractérisée par le fait que l'anneau d'étranglement (51) est formé sur un élément d'insertion (52) pouvant s'insérer axialement dans le corps (10) et faisant corps avec un anneau de corps (48) qui est adjoint à l'anneau de palier (16) du corps de palier (15).

20. Valve selon les revendications 4 et 13, caractérisée par le fait que le ou les canaux (26) présentent une plus petite section d'écoulement que le passage pouvant être fermé (82).

Fig.1

Fig. 2

Fig. 3

Fig. 4

Fig. 5

Fig. 6

# Fig. 7

# Fig. 8

Fig.9

Fig.10